# EUROPEAN PATENT APPLICATION

(11) **EP 1 690 584 A2**
(43) Date of publication of application: **16.08.2006**
(21) Application number: 05028477.7
(22) Date of filing: 24.12.2005
(51) Int. Cl.: B01D 39/16

(54) **Corona-treated polypropylene liquid filtration media**

(30) Priority: 28.12.2004 US 24211
(71) Applicant: Johns Manville International, Inc., Denver, Colorado 80202 (US)
(72) Inventor: Vair, Larry Leroy, Lakewood Colorado 80227 (US); Sanders, Robert, Rochester New Hamshire 03867 (US)
(74) Representative: Luderschmidt, Schüler & Partner

(57) **Abstract**

Improved liquid filtration media with lower pressure drop and increased dirt holding capacity includes a fibrous mat of randomly oriented meltblown polypropylene fibers, where mat has a mean flow pore size of 0.2 to 10 microns and has been corona treated.

## Description

### BACKGROUND OF THE INVENTION

### Field Of The Invention

The present invention relates to liquid filtration media and, in particular, to liquid filtration media with reduced pressure drops and higher dust or dirt holding capacities.

### Description Of The Related Art

Filtration media may be made from mats of meltblown polymeric fibers. Filtration media with large pressure drop and/or low dust or dirt holding capacity have increased operating costs and require more frequent replacement as compared to filtration media with reduced pressure drop and/or higher dust or dirt holding capacity. Thus, there is a need to provide filtration media made from meltblown polymeric fibers with increased resiliency and loft and reduced pressure drop across the filtration media while increasing the dust or dirt holding capacity of such filtration media.

### SUMMARY OF THE INVENTION

Provided by the present invention is a fibrous meltblown polypropylene fiber mat and a method of making the fibrous meltblown polypropylene mat of the present invention. The mat of the present invention provides an improved liquid filtration medium with a lower pressure drop across the liquid filtration medium and an increased dust or dirt holding capacity. The fibrous meltblown polypropylene mat is formed of randomly oriented meltblown polypropylene fibers, and has a mean flow pore size ranging from 0.2 to 10 microns. The mat has also been corona-treated to achieve its properties.

In another embodiment, the present invention provides a method of forming a liquid filtration medium having a mean flow pore size of 0.2 to 10 microns comprising meltblowing polypropylene through a fiberizing die tip to form the liquid filtration medium. Corona treatment is applied to the liquid filtration medium.

In a further embodiment, the present invention provides a method of liquid filtration comprising filtering a liquid through a liquid filtration medium having a mean flow pore size of 0.2 to 10 microns, the liquid filtration medium comprising corona-treated, meltblown polypropylene.

### BRIEF DESCRIPTION OF THE FIGURE OF THE DRAWING

The Figure graphically depicts pressure versus flow rate for liquid filtration media of the present invention as well as comparative liquid filtration media.

### DESCRIPTION OF THE PREFERRED EMBODIMENTS

The liquid filtration medium of the present invention is made from a mat of randomly oriented, meltblown polypropylene fibers. Meltblowing is described, for example, in U.S. Patent Nos. 3,849,241; 4,307,143; and 4,707,398, which are all herein incorporated by reference. The mat of meltblown polypropylene fibers forming the liquid filtration medium is made by melting polypropylene within a melter and extruding the molten polypropylene through a fiberizing die tip comprising a plurality of orifices, or through a plurality of fine, usually circular, die capillaries, to form continuous primary filaments or molten threads. The continuous primary filaments exiting the orifices are introduced directly into a high velocity, usually heated gas (e.g., air) stream which attenuates the filaments of molten polypropylene to reduce their diameter and forms discrete meltblown fibers from the continuous filaments. The meltblown fibers thus formed are cooled and collected, normally on a foraminous spun bond mat backing sheet, to form a mat of randomly oriented polypropylene fibers having a basis weight ranging from about 5 g/m² to about 500 g/m². During this fiberization process, the molten polypropylene forming the fibers is rapidly cooled from a temperature ranging from about 450°F to about 500°F to the ambient temperature of the collection zone, e.g., about 80°F. The meltblown fibers formed by this process typically have a mean diameter from about 0.5 to about 15 microns. The liquid filtration medium of the present invention, formed of meltblown polypropylene fibers, is controlled to have a mean flow pore size of 0.2 to 10 microns. In order to obtain a desired final thickness of liquid filtration medium, the liquid filtration medium can be compressed by treatment with a commercially available calendar.

Corona treatment is achieved by the application of sufficient direct current voltage to an electric field initiating structure (EFIS) in the proximity of an electric field receiving structure (EFRS). The voltage should be sufficiently high such that ions are generated at the EFIS and flow from the EFIS to the EFRS. Both the EFIS and the EFRS are desirably formed from non-conductive materials. Suitable non-conductive materials include ceramic materials and rubber. Methods of corona treatment are well known by those skilled in the art. The corona treatment may be applied at the fiberizing die tip or when the liquid filtration medium is calendered, either before or after calendering. As corona treatment increases the hydrophilicity of the polypropylene, it has been found that there is little benefit to corona treating a polypropylene liquid filtration medium comprising meltblown polypropylene having a mean flow pore size above 10 microns, since the pressure drop through such liquid filtration medium is not greatly effected by the hydrophobic nature of the polypropylene. Thus, the media of the present invention allows one to realize its advantages most efficiently.

One particular technique of corona discharge is disclosed in U.S. Patent No. 5,401,446, which is herein incorporated by reference. This technique involves subjecting the web to a pair of electrical fields wherein the electrical fields have opposite polarities. Each electrical field forms a corona discharge.

The liquid filtration media of the present invention exhibits superior properties to equivalent untreated liquid filtration media. More specifically, the liquid filtration media of the present invention exhibits longer life and increased dust or dirt holding capacity compared to equivalent untreated liquid filtration media, as a result of lower pressure drop. At a given flow rate, a pressure drop across the liquid filtration media of the present invention is approximately 50% of the pressure drop across equivalent untreated liquid filtration media. Conversely, at a given pressure drop, a flow rate through the liquid filtration media of the present invention is approximately 200% of the flow rate through equivalent untreated liquid filtration media.

Specifically, the Figure is a graph of pressure, in pounds per square inch (psi), versus flow, in liters per minute (Ipm), for the liquid filtration media of the present invention as well as comparative liquid filtration medium. Properties of the liquid filtration media include a basis weight of 102.0 grams per square meter (GSM), an air permeability of 0.10 feet per minute (CFM), a thickness of 0.229 millimeters (mm), a bubble point of 100 inches of water capacity (w.c.), and a mean flow pore size of 0.8 microns.

The comparative liquid filtration medium of the Figure is an untreated meltblown polypropylene liquid filtration medium. Further included in the Figure are a meltblown polypropylene liquid filtration medium that has been washed in Isopropyl Alcohol (IPA) and a liquid filtration medium of the present invention that has been stored for three years. While the meltblown polypropylene liquid filtration medium that has been washed in IPA produces similar flow characteristics as the liquid filtration medium of the present invention, the pressure drop across the meltblown polypropylene liquid filtration medium that has been washed in IPA increases as the IPA is flushed from the liquid filtration medium. Also, IPA washing imparts an additional costly and time consuming process step. The liquid filtration medium of the present invention that has been stored for three years exhibits no reduction in hydrophilicity.

In describing the invention, certain embodiments have been used to illustrate the invention and the practices thereof. However, the invention is not limited to these specific embodiments as other embodiments and modifications within the spirit of the invention will readily occur to those skilled in the art on reading this specification. Thus, the invention is not intended to be limited to the specific embodiments disclosed, but is to be limited only by the claims appended hereto.

## Claims

1. A liquid filtration medium comprised of a meltblown polypropylene mat which has been corona-treated and has a mean flow pore size of 0.2 to 10 microns.

2. The liquid filtration medium of claim 1, wherein the liquid filtration medium exhibits longer life as compared to a meltblown polypropylene mat having a mean flow pore size of 0.2 to 10 microns that has not been corona-treated.

3. The liquid filtration medium of claim 1, wherein the liquid filtration medium exhibits increased dust or dirt holding capacity as compared to a meltblown polypropylene mat having a mean flow pore size of 0.2 to 10 microns that has not been corona-treated.

4. The liquid filtration medium of claim 1, wherein the liquid filtration medium exhibits lower pressure drop as compared to a meltblown polypropylene mat having a mean flow pore size of 0.2 to 10 microns that has not been corona-treated.

5. The liquid filtration medium of claim 1, wherein the liquid filtration medium does not exhibit a reduction in hydrophilicity after having been stored for three years.

6. A method of forming a liquid filtration medium having a mean flow pore size of 0.2 to 10 microns comprising:
a) meltblowing polypropylene through a fiberizing die tip to form a polypropylene fiber mat; and
b) applying corona treatment to the mat.

7. The method of claim 6, wherein the corona treatment is applied at the fiberizing die tip.

8. The method of claim 6, further comprising calendering the liquid filtration medium prior to applying the corona treatment.

9. The method of claim 6, further comprising calendering the liquid filtration medium after applying the corona treatment.

10. A method of liquid filtration comprising filtering a liquid through a liquid filtration medium comprising a corona-treated, meltblown polypropylene mat having a mean flow pore size of 0.2 to 10 microns.

11. The method of claim 10, wherein at a given flow rate, a pressure drop across the liquid filtration medium is less than a pressure drop across a meltblown polypropylene mat having a mean flow pore size of 0.2 to 10 microns that has not been corona-treated.

12. The method of claim 10, wherein at a given flow rate, a pressure drop across the liquid filtration medium is approximately 50% of a pressure drop across a meltblown polypropylene mat having a mean flow pore size of 0.2 to 10 microns that has not been corona-treated.

13. The method of claim 10, wherein at a given pressure drop, a flow rate through the liquid filtration medium is greater than a flow rate through a meltblown polypropylene mat having a mean flow pore size of 0.2 to 10 microns that has not been corona-treated.

14. The method of claim 10, wherein at a given pressure drop, a flow rate through the liquid filtration medium is approximately 200% of a flow rate through a meltblown polypropylene mat having a mean flow pore size of 0.2 to 10 microns that has not been corona-treated.
